# EUROPEAN PATENT APPLICATION

(11) **EP 1 518 652 A1**
(43) Date of publication of application: **30.03.2005**
(21) Application number: 04020986.8
(22) Date of filing: 03.09.2004
(51) Int. Cl.: B29B 17/00, B29B 9/14, B29B 7/92, B09B 3/00

(54) **An apparatus for making molded resin products**

(30) Priority: 11.09.2003 JP 2003319876; 10.10.2003 JP 2003352505; 10.10.2003 JP 2003352540
(71) Applicant: MISAWA HOMES CO., LTD, Tokyo 168-8533 (JP)
(72) Inventor: Kamite, Masayuki, Tokyo (JP); Sakai, Yasuo, Tokyo (JP); Ozaki, Daijiro, Tokyo (JP)
(74) Representative: Goddar, Heinz J., Dr.

(57) **Abstract**

The present invention provides an apparatus (1) for making molded resin products, comprising: measuring instruments (18a-18d) which continuously feed various molding materials containing cellulose fine powder (3), resin powder (7), and FRP powder (5) and measuring various molding materials according to a given proportion; mixing hopper (19) and pelletizer (20) which always receive various materials measured by measuring instruments (18a-18d) and continuously fed in a certain proportion to make particles by mixing, melting, and pelletizing various materials; extruder (22) which makes molded resin products by mixing and melting the particles to form a required form. By using this apparatus, waste FRP can be simply and effective recycled and molded resin products can be made in high productivity.

## Description

### FIELD OF THE INVENTION

The present invention especially relates to an apparatus for making molded resin products by recycling useless waste FRP in cleaning regions, bathing pools, and waterproof plates, etc.

### BACKGROUND OF THE INVENTION

Majority of cleaning regions, bathing pools, and waterproof plates, etc. use, for example, fiber-reinforced plastics (abbreviated as FRP hereafter) as molding materials.

However, when the molded products made from such FRP become wastes, their dispose treatment is regarded as a social problem since they are difficult to crush and burn off. Therefore, effective processes for recycling waste FRP are being searched for in recent years.

The prior art discloses a process (refer to Patent Literature 1), i.e., the first layer is formed by fixing the molding material formed from the plastic thermosetting resin on the first mold of the high temperature side while maintaining a temperature difference between the first mold and the second mold, and then performing combination of the first mold and second mold.

Besides, the molded resin product having the first layer and second layer is formed by coarsely crushing the hardened molded waste FRP into FRP coarse powder in advance, fixing the molding material obtained by incorporating a given amount of the FRP coarse powder into an unhardened thermosetting resin on the first layer, and performing combination of the molds.

Besides, in forming the second layer, the molding material containing FRP coarse powder is fixed and the combination is performed in the stage when the side of the second mold of the first layer has not fully hardened.

However, the molded resin product made by the process disclosed in Patent Literature 1 needs more executing procedures and longer time since after forming the first layer using the thermosetting plastic resin containing no FRP coarse powder, a second molding procedure is needed to form the second layer on the first layer using the molding material containing FRP coarse powder in the stage wherein the first layer is not fully hardened. Therefore, the productivity is low.

Besides, there exists the problem of easy separation of the first layer from the second layer since different executing procedures are used in forming the first layer and second layer.

The appearance of the molded resin product molded in such a way is not good since the product contains FRP coarse powder and the FRP coarse powder would clearly appear on the surface, and even the surface of the molded resin product is coated, the bonding performance of the coating with the molded resin product is still poor. Therefore the apparent quality is desired to be improved.

On the other hand, the prior art also discloses the following process for making molded resin products, i.e., weighing various molding materials with the measuring instruments to achieve a given proportion, feeding them into a sand box of a molding machine, mixing and melting to form a required form, and thereby yielding the molded resin product.

According to the prior art, the measurement is known to be performed in the following way (see Patent Literature 2): the measurement of various molding materials usually uses the batch measurement. Various molding materials are fed to the equipped measuring instruments from respective hoppers through switching devices, and when the amounts reach certain values, feeding is stopped by closing the switching devices and various materials are fed to the sand boxes straight below the measuring instruments.

However, using the batch measurement as disclosed in Patent Literature 2, the molded product can not be continuously made in the following procedure since when the amounts reach certain values, feeding is stopped and various materials are fed to the sand boxes from various measuring instruments, and therefore the productivity is not high.

Besides, the prior art also discloses the following process for making the molded resin product which mixes the cellulose fine powder made from wood, resin, and pigment containing no FRP and melts the mixture to form a required form, i.e., mixing the cellulose fine powder, resin, and pigment to make various particles first, and then making the molded resin product by further mixing and melting these particles to form a required form and make molded resin products (see Patent Literature 3)

In the process as disclosed in Patent Literature 3, various particles are made by, for example, feeding various materials into the mixing device, and mixing and melting them to form required forms.

However, when various materials are directly molded using the mixing device, various materials would separate in the hopper due to the difference in specific gravity, and therefore they could not be uniformly mixed. Besides, the mold of the particle is very difficult since the dust would fly around and the proportion would change.
[Patent Literature 1] JP 96-244055
[Patent Literature 2] JP 98-193370
[Patent Literature 3] JP 98-305470

### DISCLOSURE OF THE INVENTION

In view of the above-mentioned problems, the objective of the present invention is to provide an apparatus for making molded resin products, which is able to simply and effectively recycle waste FRP, make molded resin products with excellent apparent quality, excellent molding performance, and high quality. Meanwhile, the apparatus can produce molded resin products with high productivity.

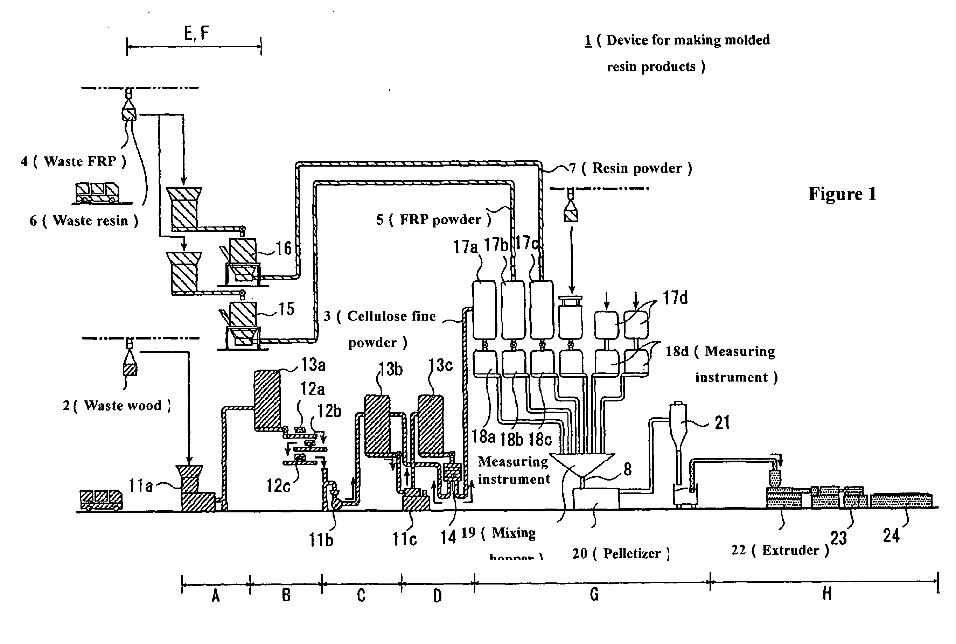

To solve the above-mentioned problems, the first embodiment of the present invention is shown in Figure 1, and is characterized in that it comprises:
measuring instruments (e.g., measuring instruments 18a-18d), which continuously feed various molding materials containing cellulose fine powder 3 made from wood, resin powder 7 made from resin, and FRP powder 5 made from waste FRP 4 and measure various molding materials according to a given proportion;
particle-making means (e.g., mixing hopper 19 and pelletizer 20), which always continuously receives various molding materials in a certain proportion measured by measuring instruments 18a-18d, and makes particles by mixing, melting, and pelletizing;
molding means (e.g., extruder 22), which makes molded resin products by mixing and melting said particles to form a desired form.

According to the first embodiment of the present invention, measuring instruments 18a-18d measure various molding materials containing cellulose fine powder 3, resin powder 7, and FRP powder 5 according to a given proportion, always continuously feed them into particle-making means 19 and 20 according to a given proportion, and particle-making means 19 and 20 makes particles by mixing, melting, and pelletizing various molding materials to make particles.

Afterwards, molding means 22 makes the molded resin product by mixing, melting, and forming to obtain a required form.

The productivity can be raised since by using continuous measurement different from batch measurement, various molding materials are always fed into particle-making means 19 and 20 in a given proportion, making it possible to make particles by using particle-making means 19 and 20 and then continuously make molded resin products using molding means 22.

Besides, the execution is ideal since unlike the prior art, wherein the second procedure for forming the second layer is needed after forming the first layer, the molded resin product can be molded in one step by making the particles derived from various molding materials containing FRP powder 5 in advance into a desired form using molding means 22.

Besides, the effective recycle of waste FRP 4 which is hard to be disposed is possible is ideal in view of the effective use of resources and environment protection.

Besides, the obtained molded resin product exhibits a wood feeling since it contains cellulose fine powder 3.

As suitable waste FRP 4, for example, the wastes derived from the floor, wall, bath pool, and waterproof plate constituting cleaning regions of a bathroom can be used.

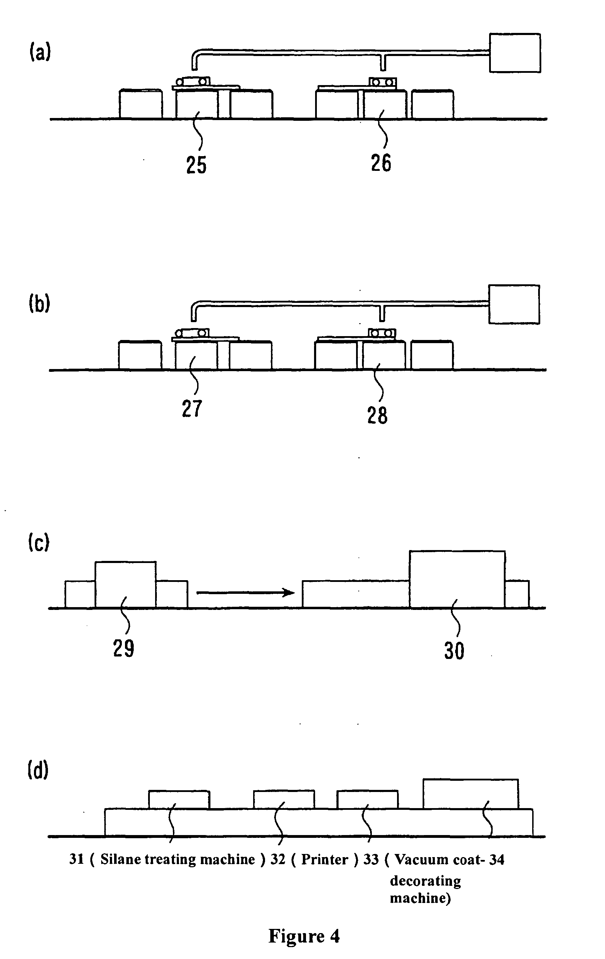

The second embodiment of the present invention is shown in Figure 4, and is characterized in that, in addition to the features of the first embodiment, it further comprises:
a silane-treating means, which treats the surface of said molded resin product with a silane-treating agent (e.g., silane-treating machine 31);
a flame-treating means (e.g., flame-treating machine 31), which treats the surface of said molded resin product with flame for oxidation after treating the surface with silane.

According to the second embodiment of the present invention, the bonding performance of the surface of the molded resin product can be enhanced since it is subjected to flame-treating for oxidation after silane-treating with a silane-treating agent using silane-treating machine 31, and thereby the finishing processing in the following procedures of printing and coating-decorating using wood grain patterns can be improved.

The third embodiment of the present invention is shown in Figure 4, and is characterized in that, in addition to the features of the second embodiment, it further comprises:
a printing means (e.g., printing machine 32), which prints wood gain patterns on the surface of the molded resin product after said flame-treating.

According to the third embodiment of the present invention, the apparent quality of the molded resin product can be raised since after flame-treating, wood grain patterns are printed on the surface of the molded resin product using printing machine 32, and by means of these wood grain patterns, the surface is hardened and FRP powder 5 easily appearing on the surface of the molded resin product do not clearly appear.

The fourth embodiment of the present invention is shown in Figure 4, and is characterized in that, in addition to the features of the third embodiment, it further comprises:
a coating-decorating means (e.g., vacuum coating-decorating machine 33), which performs UV coating-decorating on the surface of the molded resin product whereon wood gain patterns have been printed, and after coarsening, performs UV coating-decorating again.

According to the fourth embodiment of the present invention, the bonding performance of the secondly formed UV coating can be enhanced and a UV coating with a certain thickness can be formed since the surface of the molded resin product, whereon wood grain patterns are printed is subjected to UV coating-decorating using UV coating-decorating machine 33, and after coarsening, the surface is subjected to the UV coating-decorating again.

By forming a UV coating with a certain thickness in this way, the surface with an excellent water-resistant performance can be made, and the product is applicable as a material for constituting the floor and wall of cleaning regions in a bathroom.

The fifth embodiment of the present invention is shown in Figure 1, in addition to the features of any one of the above four embodiments, it is characterized in that:
said wood is waste wood 2 containing impurity, and said resin is waste resin 6 made from polypropylene resin or packing films made from polyolefin resin.

According to the fifth embodiment of the present invention, useless waste wood 2, waste resin 6, and packing film 6 could be recycled, this is ideal in view of the effective use of resources and environment protection.

Waste wood 2 includes the waste wood thrown away when buildings like houses and so on are disaggregated, waste wood thrown away when furniture is disaggregated, and wood head and sawdust thrown away in civil engineering, etc.

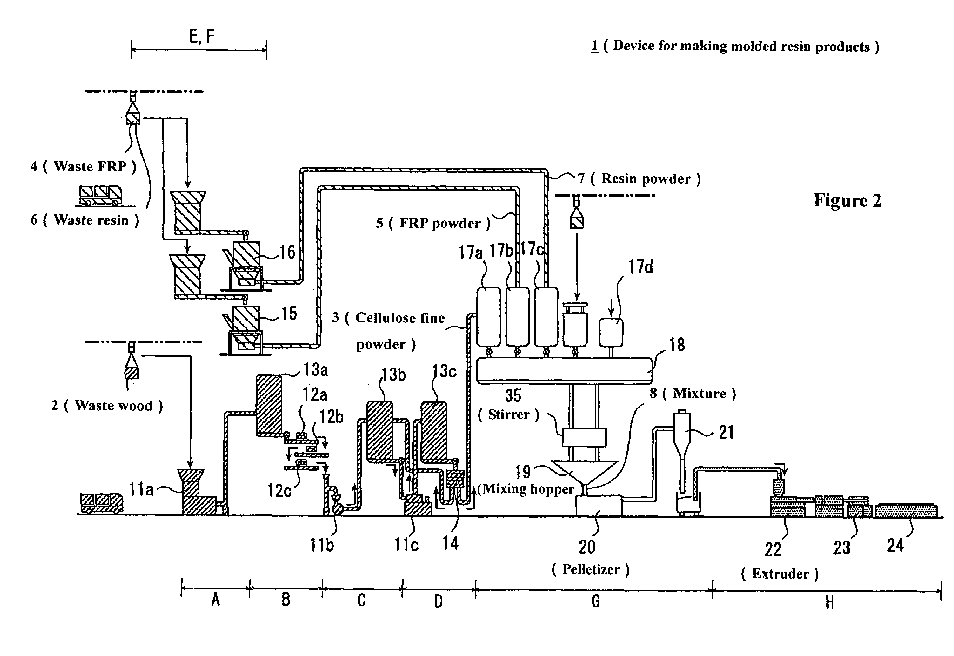

The sixth embodiment of the present invention is shown in Figure 2, and it is characterized in that it comprises:
a mixing means (e.g., stirring machine 35), which uniformly mixes various molding materials of wood-derived cellulose fine powder 3, resin-derived resin powder 7, and waste FRP 4-derived FRP powder 5 in advance to obtain mixture 8;
a particle-making means (e.g., mixing hopper 19, mixing device 20), which uniformly mixes, melts, and palletizes mixture 8 to make particles;
a molding means (e.g., extruder 22), which makes molded resin products by mixing and melting said particles to form a required form.

According to the sixth embodiment of the present invention, particles with an excellent molding performance and high quality can be made compared to the prior art, wherein various molding materials are molded in a direct mixing device by uniformly mixing various molding materials containing cellulose fine powder 3, resin powder 7, and waste FRP powder 5 in advance to obtain mixture 8 using mixing machine 35, and then mixing, melting, and pelletizing mixture 8 using particle-making machine 19 and 20.

Besides, molded resin products with high quality can be made by making these particles into a required form using molding machine 22.

According to the apparatus of the present invention, the productivity can be raised since particles can be continuously made by feeding various molding materials into the particle-making in a given proportion using the continuous measurement different from the batch measurement in the prior art, and then the particles can be continuously made into molded resin products using the molding machine.

Besides, particles with an excellent molding performance and high quality can be made compared to the prior art by uniformly mixing various molding materials containing cellulose fine powder, resin powder, and FRP powder in advance using the mixing machine, and then mixing, melting, and pelletizing the uniformly-mixed mixture using the particle-making machine.

Besides, molded resin products with high quality can be made by further forming a required form using the molding machine.

Besides, the execution is ideal since the molding of the molded resin product can be performed in one step compared to the prior art by mixing, melting the uniformly-mixed mixture to form particles and then form a required form.

Besides, the waste FRP which is hard to be disposed can be recycled, so this is ideal in view of the effective use of resources and environment protection. Furthermore, the derived molded resin product exhibits a wood feeling since it contains cellulose fine powder.

Besides, the bonding performance of the surface of the derived molded resin product can be enhanced by treating the surface with a silane-treating agent using the silane-treating machine and then oxidizing the surface using the flame-treating machine, and thereby the apparent quality can be raised by improving the decorating effect of printing and coating-decorating using wood grain patterns in the following procedure.

### BRIEF DESCRIPTION OF THE DRAWINGS

Figure 1 is the diagram showing the embodiment of the present invention and a schematic diagram of apparatus 1 for making the molded resin product.
Figure 2 is the diagram showing another embodiment and a schematic diagram of apparatus 1a for making the molded resin product.
Figure 3 is the diagram showing another embodiment and a schematic diagram of apparatus 1b for making the molded resin product.
Figures 4 (a)-(d) are schematic diagrams showing the partial devices, which perform the surface processing of the molded resin product, of the apparatus for making the molded resin product.

### Label in the drawings

- 1: apparatus for making molded resin products;
- 2: waste wood;
- 3: cellulose fine powder;
- 4: waste FRP;
- 5: FRP powder;
- 6: waste resin;
- 7: resin powder;
- 8: mixture; 18a-18d measuring instruments (measuring means);
- 19: mixing hopper (particle-making means);
- 20: pelletizer (particle-making means);
- 22: extruder (molding means);
- 31: silane-treater and flame-treater (silane-treating means and flame-treating means);
- 32: printing machine (printer);
- 33: vacuum coating-decorating machine (UV coat-decorating means);
- 35: stirrer

### THE BEST MODEL TO CARRY OUT THE INVENTION

The embodiments of the present invention will be illustrated bellow.

Figures 1-4 are schematic diagrams showing the apparatus of the present invention for making molded resin products.

As shown in Figure 1, the apparatus 1 for making molded resin products of the present invention comprises:
wood crushing means (crushing devices 11a, 11b, and 11c) for making cellulose fine powder 3 by crushing waste wood 2;
an FRP crushing means (crushing device 15) for making FRP powder 5 by crushing waste FRP 4;
a resin-crushing means (crushing device 16) for making resin powder 7 by crushing waste resin 6;
measuring means (measuring instruments 18a-18d) which continuously feed various molding materials containing cellulose fine powder 3, FRP powder 5, and resin powder 7, and measures various molding materials according to a given proportion;
particle-making means (mixing hopper 19 and pelletizer 20), which always receives various molding materials measured and continuously fed in a certain proportion and makes particles by mixing, melting;
a molding means (extruder 22), which makes molded resin products by molding the particles into a desired form.

Besides, as shown in Figure 4, the apparatus 1 comprises a silane-treating means (silane-treating machine 31), which treats the surface of the derived molded resin product with a silane-treating agent;
a flame-treating means (flame-treating machine 31), which treats the surface of the molded resin product with flame for oxidation after silane-treating;
a printing means (printer 32), which prints wood grain patterns on the surface of the molded resin product after flame-treating;
a UV coating-decorating means (vacuum coating-decorating machine 34), which performs UV coating-decorating on the printed surface of the molded resin product and after coarsening, performs UV coating-decorating again.

Firstly, waste wood 2 with a size of 4-5 cm is crushed into particles with a size of several millimeter using apparatus 1 for making molded resin products (the first wood crushing procedure A).

Waste wood 2 includes waste wood thrown away when buildings like houses, etc. are disaggregated, waste wood thrown away when furniture is disaggregated, and wood heads and sawdust thrown away in civil engineering.

Crushing device (wood crushing machine) 11a used in the first wood crushing procedure A has the function of crushing massive wood into particles with a size of several millimeter, in particular, crushing device 11a has many bulges on the surface of two opposite rollers and crushes the material passing through the gap between the rollers by pressurizing the rollers while they are rotating.

Crushing device 11a is not limited to such a device, and other coarsely crushing devices with the same function can also be used.

For example, a jaw-type crusher wherein the feed is placed between a clamp mouth and a vibrating jaw forming an upward V-shape opening and crushed by pressurizing, and other coarsely crushing devices such as a continuous rotary crusher wherein a movable crushing face rotates in a fixed crushing face can also be used.

Then crushed waste wood 2 is sent to wood powder storage tank 13a. Then the metals which can adsorb on magnets are removed from waste wood 2 stored in wood powder storage tank 13a with iron-removing machine 12a such as a strong magnet, and stainless steel is then removed using stainless steel separator 12b.

Finally, the metals which possess conductivity but do not adsorb on the magnet are separated and removed using nonferrous metal separator 12c (separation procedure B).

Then the primarily crushed material (waste wood 2) obtained after the first wood crushing procedure A and the metal removing procedure is crushed into fine powder in the second wood crushing procedure C. The crushing device (wood crushing machine 11b) used in second wood crushing procedure C is a device able to crush massive materials into fine powder with a size of about 1 mm, in particular, it is a hammer crusher which uses fast-rotating hammer tips to repeatedly crush the material until the material passes through the circular sieve holes around the hammer tips.

Crushing device 11b is not limited to the aforesaid hammer crusher, and it can be other crushing devices with the same function.

For example, it can be a cutter, which uses cutting knives for crushing, or a roll-type crusher which crushes the material by the press of the rollers.

The secondarily crushed material (waste wood 2) obtained in the second crushing procedure C is sent to wood powder storage tank 13b.

Then cellulose fine powder 3 is made by crushing the secondarily crushed material stored in storage tank 13b. Crushing device (wood crushing machine) 11c used in the third wood crushing procedure D is a device able to crush the material obtained in the second wood crushing procedure C into finer powder.

In particular, crushing device 11c is a so-called pin crusher able to carry out fine crushing by the mutual action of impact and repulsion of the pins equipped on a disc.

More particularly, the pin crusher has a rotary disk with many pins in the vertical direction and a fixed disc facing the rotary disk and having many pins, and when the material obtained in the second crushing procedure C is fed to the center of the rotary disc, it is thrown into the gaps among the pins installed on the rotary and fixed discs by the centrifugal force, subjected to the mutual action of impact and repulsion caused by the pins, and thus crushed into finer powder.

In the third wood crushing procedure D, the material is crushed into particles with a size about 300 µm by means of said pin crusher.

Crushing device 11c is not limited to said pin crusher, other finely crushing devices having the same crushing function such as the ball crusher and stone mortar can also be used.

In the aforesaid wood crushing procedures A, C, and D, the recovered waste wood 2 is subjected to stagewise and effective crushing in three stages.

Cellulose fine powder 3 obtained in the third crushing procedure D is sent to wood powder storage tank 13c, and screened with a sieve of 300 µm to obtain particles with an average diameter of about 300 µm.

That is to say, cellulose fine powder 3 is screened with sieve 14, the fine powder bigger than 300 µm returns to crusher 11c for crushing again, while that smaller than 300 µm is sent to subsequent wood measuring tank 17a for storage.

On the other hand, waste FRP 4 is crushed into FRP powder 5 with an average diameter less than 50 µm using FRP crushing machine 16 (waste FRP crushing procedure E).

That is to say, such waste FRP crushing procedure E has the same procedures as the first wood crushing procedure A, the second wood crushing procedure C, and the third wood crushing procedure D and uses the same device as crushing devices 11a, 11b, and 11c. The illustration of FRP crushing procedure E is omitted because it is basically the same as crushing procedures A, C, and D.

As suitable FRP waste 4, for example, the wastes derived from the floor, bath pool, and waterproof plate constituting cleaning regions of a bathroom can be used.

The obtained FRP powder 5 is then stored in FRP measuring tank 17b.

Waste resin 6 is crushed into resin powder 7 with an average diameter less than 3-6 mm using resin crushing machine 18 (resin crushing procedure F).

That is to say, resin crushing procedure F has the same procedures as the first wood crushing procedure A, the second wood crushing procedure C, and the third wood crushing procedure D and uses the same devices as crushing devices 11a, 11b, and 11c. The illustration of resin crushing procedure F is also omitted since it is basically the same as crushing procedures 11a, 11b, and 11c.

As suitable waste resin 6, for example, wastes derived from the packing film coated for protecting the surface of bath pools, vessels or packing for food such as drinks, and trays, etc. can be used.

The film is preferably the one made from the olefin resin, and the vessel, packing and tray, etc. of food is preferably the waste made from polypropylene resin, polyvinyl chloride resin, polyethylene resin, foaming vinyl chloride resin, polystyrene resin, and ABS resin, etc. with the waste made from polypropylene resin being more preferred.

Obtained resin powder 7 is then stored in resin measuring tank 17c.

Afterwards, cellulose fine powder 3 stored in wood powder measuring tank 17a, FRP powder 5 stored in FRP measuring tank 17b, and resin powder 7 stored in resin measuring tank 17c are fed into mixing hopper (particle-making means) 19 through respective measuring instruments 18a-18c installed on respective measuring tanks 17a-17c.

Here, the pigment, hardening agent, lubricant such as acid-modified polyolefin, etc. stored in storage tank of auxiliary materials 17d are also fed into mixing hopper 19 through respective measuring instruments 18d. Various materials are mixed and molten in mixing hopper 19 to obtain a uniform mixture 8 (mixing procedure G).

Besides, on the basis of mixture 8, 10-65% by weight of cellulose fine powder 3, 10-30% by weight of FRP powder 5, 25% by weight of polypropylene resin 7, 10% by weight of film powder 7, 9% by weight of pigment, 0.5% by weight of the hardening agent, 3% by weight of the lubricant are measured with respective measuring instruments 18a-18d and fed into mixing hopper 19.

Besides, differing from batch measuring instruments, measuring instruments 18a-18d of the present embodiment are continuous measuring instruments, which measure various molding materials and then continuously feed them into mixing hopper 19.

That is, in the batch measurement, various molding materials are fed to the respective measuring instruments from various measuring tanks until the amount measured by the measuring instruments reaches given values, and then various molding materials are fed into the mixing hoppers from various measuring instruments, while in the continuous measurement of the present embodiment, various molding materials are continuously fed to respective measuring instruments 18a-18d from respective measuring tanks 17a-17d, measured with respective measuring instruments 18a-18d to reach a given proportion, and always continuously fed to mixing hopper 19 in a certain proportion.

Afterwards, mixture 8 in mixing hopper 19 is fed into pelletizer (particle-making means) 20, which extrudes and molds mixture 8 from the mold while precisely cutting it into a given size. Then particles are made by cooling.

Besides, the screw rod in the rolling drum of pelletizer 20 is double-shaft type, able to uniformly mix and melt mixture 8.

The obtained particles are then fed into the hopper of extruder (molding means) 22 through cyclone 21, extruded by the screw rod in the rolling drum while being heated in the heating rolling drum, and then extruded from the mold at the front end of the rolling drum, and made into the molded resin product with a required form (molding procedure H).

In molding procedure H, it is desired that the molding temperature is set in the range of 160-220°C, preferably in the range of 170-185°C. The reason why the molding temperature is set in the range of 160-220°C is that resin powder 7 can not fully soften at a temperature below 160°C and therefore is hard to uniformly mix with cellulose fine powder 3, but some changes such as carbonization, etc. would happen to cellulose fine powder 3 if the molding temperature exceeds 220°C.

Because the molding temperature is set in the range of 160-220°C, cellulose fine powder 3 obtained in wood crushing procedures A, C, and D does not change by heat, and resin powder 7 can be fully frozen and softened, uniformly mixed with cellulose fine powder 3, and molded in molding procedure H.

Besides, extruder 22 is preferably equipped with two molds. By equipping two molds, it is possible to make two molded resin products one time, and thereby the productivity is raised.

Besides, the molded resin product extruded from the mold is drawn by drawing machine 23 and cut into a given length by cutter 24.

Afterwards, the molded resin product made in this way as described above should be subjected to surface processing. The surface processing will be illustrated below referring to Figures 4 (a)-2(d).

Firstly, as shown in Figure 4 (a), the form of the molded resin product is adjusted using sizing machine 25. Sizing machine 25 is equipped with an opening with an inner diameter roughly equal to the outer diameter of the molded resin product to be molded, and the cross-sectional form and size of the molded resin product can be trimmed by inserting the molded resin product into the opening.

Afterwards, the trimmed molded resin product is chamfered using chamfering machine 26 and then as shown in Figure 4 (b), the surface of the a molded resin product is abraded with abrasive paper 27 for coarsening by forming many trip grains to complete the abrasive paper-abrading processing.

Here, it is preferable that the surface of the molded resin product is first abraded with coarse abrasive paper (e.g., 120# abrasive paper), and then abraded with fine abrasive paper (e.g., 180# abrasive paper).

Here, the residue generated in abrasion with abrasive paper is preferably completely blown off using the auxiliary device (not shown) since it would exert significant effect on the following decorating procedure.

The molded resin product is then cut into a given length with cutter 28 while following the movement of the molded resin product on a roller conveyer.

Afterwards, as shown in Figure 4 (c), the molded resin product formed by cutting with cutter 28 is coating-decorated with roller coating-decorating machine 29, and then fed into drying oven 30 for drying.

Afterwards, as shown in Figure 4 (d), the surface of the molded resin product is firstly subjected to silane-coupling-treating using silane-treating machine (silane-treating means) 31 with, for example, a silica-type silane-treating agent such as organic siloxane, etc., and then subjected to flame-treating with flame-treating machine (flame-treating means) 31 (flame-treating).

The so-called flame-treating is to bond the coating with the molded resin product, and directly bake the surface of the molded resin product for oxidation with the flame of a gas inflamer.

Wood grain patterns can be printed on the surface of the flame-treated molded resin product using printing means (printer) 32. Here, the substrate of wood grain patterns is firstly printed on the surface of the flame-treated molded resin product, and then the practical part is printed. The product with a wood feeling is made through two-step printing.

Afterwards, the surface of the molded resin product is coated with UV coating using vacuum coating-decorating machine (UV coating-decorating means) 33, and then dried in UV drying oven 34. The dried surface of the molded resin product is scrapped for coarsening, then coated with UV coating again using vacuum coating-decorating machine 33, and dried in UV drying oven 34.

Vacuum coating-decorating machine 33 is equipped with an inlet part and an outlet part for the molded resin product to be coating-decorated to pass through, and a vacuum chamber, wherein the molded resin product is impregnated with coating, and the unwanted coating is removed at the outlet part to obtain a given coating layer.

Besides, the first coating is preferably performed in a way for the thickness of the coating to reach about 60 µm, and the second coating allows the thickness of the coating to reach about 30 µm.

The UV coating includes, for example, non-solvent fast-drying photosensitive coating, such as photopolyacrylate, etc.

As shown above, apparatus 1 according to the embodiment of the present invention for making molded resin products, various measuring instruments 18a-18d continuously measure various molding materials according to a given proportion and always continuously feed them into mixing hopper 19 in a certain proportion, and pelletizer 20 makes particles by mixing and melting fed mixture 8.

Afterwards, molded resin products are made by mixing and melting the particles to form the required form using extruder 22.

The productivity can be raised since by using the continuous measurement different from the prior batch measurement, various molding materials are always fed into pelletizer 20 in a given proportion, making it possible to continuously make particles using pelletizer 20.

Besides, the execution is ideal since compared to the prior art, the molding of the molded resin product can be performed in one step by making various molding materials containing FRP powder 5 into particles and then forming a required form.

Besides, waste FRP 4 which is hard to be disposed can be effectively recycled, so this is ideal in view of the effective use of resources and environment protection. Furthermore, the derived molded resin product exhibits a wood feeling since it contains cellulose fine powder 3.

The bonding performance of the surface of the molded resin product can be enhanced even for polypropylene which is hard to be coating-decorated since the surface is simultaneously subjected to flame-treating for oxidation and silane-treating using silane-treating machine 31, and thereby the decorating effect of printing or coating-decorating using wood grain patterns, etc in the following procedures can be improved.

Besides, the apparent quality can be raised since wood grain patterns are printed on the surface of the molded resin product after flame-treating and by means of these wood grain patterns, hard FRP powder 5 easily appearing on the surface of the molded resin product do not clearly appear.

Besides, the bonding performance of the secondarily formed UV coating can be enhanced and thereby a UV coating with a certain thickness can be formed since the surface of the molded resin product, whereon wood grain patterns have been printed is subjected to UV coating-decorating, and after coarsening, the surface is subjected to UV coating-decorating again.

Therefore, a material with excellent water-resistance can be made, which is applicable as a material for the floor or wall of cleaning regions in a bathroom.

Besides, the resin is waste resin 6 made from polypropylene resin or packing films of polyolefin resin, and the wood is waste wood 2 containing impurities, therefore this is ideal in view of the effective use of resources and environment protection.

The present invention is not limited to the aforesaid embodiment and examples, and adequate changes can be made without departing from the scope of the main contents of the present invention.

In the present embodiment, cellulose fine powder 3 is obtained from but not limited to waste wood 2, and it can also be, for example, the material obtained by crushing wood, bagasse, and rice straw , etc.

Besides, the surface processing is not limited to the aforesaid process, and adequate changes can be made. For example, embossing processing can be used to form grooves on the surface of the molded resin products.

Another embodiment will be illustrated below.

Figure 2 is a schematic diagram showing apparatus 1a of the present invention for making molded resin products.

As shown in Figure 2, apparatus 1a of the present invention for making molded resin products comprises:
wood crushing means (crushing devices 11a, 11b, and 11c) for making cellulose fine powder 3 by crushing waste wood 2;
an FRP crushing means (crushing device 15) for making FRP powder 5 by crushing waste FRP 4;
a resin crushing means (crushing device 16) for making resin powder 7 by crushing waste resin 6;
a mixing means (stirrer 35), which mixes various molding materials containing cellulose fine powder 3, FRP powder 5, and resin powder 7 in advance to make mixture 8.

In mixing procedure G of the present embodiment, cellulose fine powder 3 stored in wood powder measuring tank 17a, FRP powder 5 stored in FRP measuring tank 17b, and resin powder 7 stored in resin measuring tank 17c are first fed into stirrer 35 (mixing means) through respective measuring instruments 18a-18c installed on respective measuring tanks 17a-17c.

At this time, the pigment, hardening agent, lubricant such as acid-modified polyolefin, etc. stored in the receiving tank of auxiliary materials 17d are also fed into stirrer 35 through measuring instrument 18.

Stirrer 35 uniformly mixes various molding materials in advance to make mixture 8. Uniform mixture 8 is fed into mixing hopper (particle-making means) 19, wherein it is further subjected to mixing and melting.

According to the apparatus 1a for making molded resin products of the present invention, compared to the prior art wherein the molding is performed using a direct mixing device, particles with an excellent molding performance and high quality can be made by uniformly mixing various molding materials containing cellulose fine powder 3, waste FRP powder 5, and resin powder 7 in advance to make mixture 8 using stirrer 35, and then mixing and melting uniform mixture 8 to pelletize using mixing hopper 19 and mixing device 20.

Afterwards, a molded resin product with high quality can be obtained by making the high quality particles into a desired form using extruding machine 22.

Further embodiments of the present invention will be illustrated below.

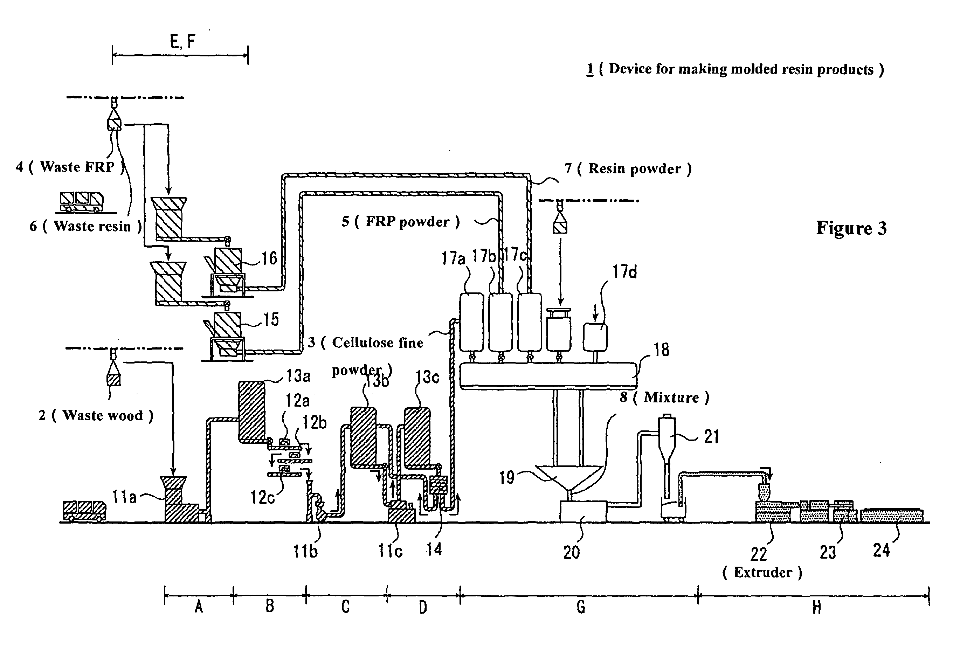

Figures 3 and 4 are a schematic diagram showing apparatus 1b of the present invention for making molded resin products.

As shown in Figure 3, apparatus 1b for making molded resin products of the present invention comprises:
wood crushing means (crushing devices 11a, 11b, and 11c) for making cellulose fine powder 3 by crushing waste wood 2;
an FRP crushing means (crushing device 15) for making FRP powder 5 by crushing waste FRP 4;
a resin crushing means (crushing device 16) for making resin powder 7 by crushing waste resin 6;
a mixing and melting means (mixing hopper 19 and mixing device 20) which mixes and melts cellulose fine powder 3, FRP powder 5, and resin powder 7 to make mixture 8;
a molding means (extruder 22) which molds mixture 8 into a required form.

Besides, as shown in Figure 4, the apparatus 1b further comprises a silane-treating means (silane-treating machine 31), which treats the surface of the derived molded resin product with a silane-treating agent;
a flame-treating means (flame-treating machine 31), which treats the surface of the molded resin product with flame for oxidation after silane-treating;
a printing eans (printer 32), which prints wood grain patterns on the surface of the molded resin product after flame-treating;
a UV coating-decorating means (vacuum coating-decorating machine 34), which coating-decorates the surface of the derived molded resin product and after coarsening, coating-decorates the surface again.

The use of the apparatus 1b for making molded resin products is ideal in view of the effective use of resources and environment protection since waste FRP which is hard to be disposed can be effectively recycled by mixing and melting mixture 8 containing cellulose fine powder 3, resin-crushed powder 7, and FRP-crushed powder 5 by using extruder 22 to form a required form and make molded resin products.

Besides, the execution is good since compared to the prior art, the molding of the molded resin product can be performed in one step by making mixture 8 containing FRP powder 5, cellulose fine powder 3, and resin powder 7 into a required form.

Besides, the molded resin product exhibits a wood feeling since it contains cellulose fine powder 3.

Besides, the bonding performance of the surface of the molded resin product can be enhanced since it is subjected to flame-treating for oxidation after silane-treating with a silane-treating agent using the silane-treating means, and thereby the apparent quality can be raised by improving the decorating effect of printing and coating-decorating using wood grain patterns in the following procedures.

By using the aforesaid embodiments, an apparatus for making molded resin products can be provided which is able to simply and effectively recycle the unwanted waste FRP of the cleaning region, bath pool, water-proof plate in a bathroom, and make molded resin products with excellent apparent quality, excellent molding performance, high quality, as well as high productivity.

The features disclosed in the foregoing description, in the claims and/or the accompanying drawings may, both separately and in any combination thereof, be material for realising the invention in diverse forms thereof.

## Claims

1. An apparatus for making molded resin products, **characterized in that** it comprises:
measuring instruments, which continuously feed various molding materials containing cellulose fine powder made from wood, resin powder made from resin, and FRP powder made from FRP, and measure various molding materials according to a given proportion;
a particle-making means, which always receive various materials measured by measuring instruments and continuously fed in a certain proportion to make particles by mixing, melting, and pelletizing various materials;
a molding means, which makes molded resin products by mixing and melting said particles to form a desired form.

2. The apparatus for making molded resin products according to claim 1, **characterized in that** it further comprises:
a silane-treating means, which treats the surface of said molded resin product with a silane-treating agent;
a flame-treating means, which treats the surface of said molded resin product with flame for oxidation after treating the surface with a silane-treating agent.

3. The apparatus for making molded resin products according to claim 2, **characterized in that** it further comprises:
a printing means, which prints wood gain patterns on the surface of the molded resin product after aforesaid flame-treating.

4. The apparatus for making molded resin products according to claim 3, **characterized in that** it further comprises:
a coat-decorating means, which performs UV coating-decorating of the surface of the molded resin product whereon wood gain patterns have been printed, and after coarsening, performs UV coating-decorating again.

5. The apparatus for making molded resin products according to any of claims 1-4, **characterized in that** said wood is waste wood containing impurities, and said resin is waste resin made from polypropylene resin or packing films made from polyolefin resin.

6. The apparatus for making molded resin products according to claim 1, **characterized in that** it further comprises:
a mixing means, which uniformly mixes various molding materials containing cellulose fine powder made from wood, resin powder made from resin, and FRP powder made from waste FRP in advance to form a mixture.
